# EUROPEAN PATENT APPLICATION

(11) **EP 4 624 635 A2**
(43) Date of publication of application: **01.10.2025**
(21) Application number: 25165392.9
(22) Date of filing: 21.03.2025
(51) Int. Cl.: C25D 1/04, C25D 3/12, C25D 5/00, C25D 7/06, H01M 4/66, H01M 10/052

(54) **SURFACE-TREATED COPPER FOIL FOR LITHIUM ION SECONDARY BATTERY, AND CURRENT COLLECTOR AND LITHIUM ION SECONDARY BATTERY**

(30) Priority: 22.03.2024 US 202463568578 P; 08.10.2024 CN 202411394182
(71) Applicant: Chang Chun Petrochemical Co., Ltd., 104 Taipei City (TW)
(72) Inventor: SHIH, You-Lin, 104 Taipei City (TW); HSU, Kun-Lin, 104 Taipei City (TW); CHENG, Kuei-Sen, 104 Taipei City (TW)
(74) Representative: Gill Jennings & Every LLP

(57) **Abstract**

Provided is a surface-treated copper foil for a lithium ion secondary battery, including a copper layer having a first side and an opposite second side and nickel-containing treatment layers disposed on the first side and the second side of the copper layer respectively, wherein a nickel coating amount on each side of the copper layer is ≥3.0 10⁴ µg/dm², and each treatment layer provides a treated surface with lightness value (L*) of color space of 30 to 60 and reduced dale height (Svk) of 0.10 to 0.65 µm. Provided also are a current collector for a lithium ion secondary battery and a lithium ion secondary battery.

## Description

### BACKGROUND

### 1. Technical Field

The present disclosure relates to a surface-treated copper foil, especially to a surface-treated copper foil applied in a lithium ion secondary battery containing a solid-state electrolyte.

### 2. Description of Associated Art

Lithium ion secondary batteries have been broadly applied in various electronic devices, electric vehicles, and energy storage systems due to their characteristics, including small size, high energy density, long life, rapid rechargeability, less memory effect, low cost, etc., and are now indispensable in modern life. To achieve a higher energy density and to achieve the purpose of large energy with small volume, techniques for improving the performances of lithium ion secondary batteries are continuously developed and innovated upon.

Most lithium ion secondary batteries in the market mainly use liquid electrolytes containing several organic compounds. However, they have the disadvantages of flammability and low stability at high temperatures. Therefore, a solid-state battery (SSB) with greater safety, durability, rapid rechargeability, and capacitance is one of the most high-profile products among lithium ion secondary batteries. A solid-state battery employs a solid-state electrolyte (SSE) which can be classified mainly into three categories: sulfides, oxides and organic polymers. The sulfide solid-state electrolyte has the advantages of high energy density, high ionic conductivity, low processing temperature, good thermal stability, etc. It focuses attention due to its development potency. However, such a battery is difficult to manufacture, and extensive research is required to overcome the commercial challenges of large-scale production and application.

For example, the negative electrode current collector material of a solid-state battery is usually stainless steel, which faces difficulties in thinning processing and is thus not favorable for downsizing and thinning of the battery. Additionally, the electrical conductivity of stainless steel is not high enough and is much lower than that of copper. If copper is used as the negative electrode current collector material to improve the electrical conductivity, it may react with sulfur in the solid-state electrolyte to form copper sulfide. This reaction can lead to in increased internal resistance of the battery, reduced cycling performance, and elevated battery temperature, thus causing safety concerns and diminished lifespan of the solid-state battery.

Studies have shown that nickel has high stability in the air and a thin protective film formed through a surface treatment on a copper foil surface such as nickel-plating may improve wear resistance, corrosion resistance and rust proof performance of the copper foil, making the copper foil chemically stable in a battery. However, the nickel-plating protective layer, which has strong adhesion and does not easily fall off, may still fail and be hard to protect the copper foil from corrosion by the solid-state electrolyte. This is because the surface-treated copper foil is bent multiple times (especially bent at a small angle close to the roll core) during the roll-to-roll process of a lithium ion secondary battery, creating cracks or creases are created in the nickel-plating protective layer.

### SUMMARY

Given the above, the present disclosure provides a surface-treated copper foil for a lithium ion secondary battery, which has better processability and resistance to sulfide corrosion.

The surface-treated copper foil for a lithium ion secondary battery of the present disclosure comprises a copper layer and at least one treatment layer. The copper layer has a first side and an opposite second side. The treatment layer is disposed on the first side and/or the second side of the copper layer, and the treatment layer contains nickel. The treatment layer has an amount of nickel (a nickel coating amount) of ≥3.0 10⁴ µg/dm², wherein the treatment layer provides a treated surface which has a chromaticity L* value of 30-60 and a reduced dale height (Svk) of 0.10-0.65 µm.

In an embodiment, the surface-treated copper foil comprises another treatment layer, and each of the treatment layers is disposed on the first side and the second side of the copper layer, respectively.

In an embodiment, the nickel coating amount is from 3.0 ×10⁴ to 21.5 × 10⁴ µg/dm².

In an embodiment, the nickel coating amount is from 4.0 ×10⁴ to 20.0 × 10⁴ µg/dm².

In an embodiment, the nickel coating amount is from 4.5 ×10⁴ to 18.5 × 10⁴ µg/dm².

In an embodiment, the reduced dale height (Svk) of the treated surface of the surface-treated copper foil is from 0.10 to 0.45 µm.

In an embodiment, a chromaticity a* value of the treated surface of the surface-treated copper foil is from -5 to 5.

In an embodiment, a chromaticity b* value of the treated surface of the surface-treated copper foil is from -5 to 5.

In an embodiment, an electrical conductivity of the surface-treated copper foil is ≥3.2 10⁷ S/m.

In an embodiment, the copper layer of the surface-treated copper foil is an electrolytic copper foil or a rolled copper foil.

The present disclosure also provides a current collector for a lithium ion secondary battery, which comprises the surface-treated copper foil described herein.

The present disclosure further provides a lithium ion secondary battery, which comprises the current collector described herein. In an embodiment, the lithium ion secondary battery comprises a solid-state electrolyte.

The present disclosure controls the nickel coating amount of a surface-treated copper foil, the chromaticity L* value and the reduced dale height (Svk) of a treated surface in a specific range, thereby ameliorating the problem of cracks caused by bending of the surface treatment layer and making the surface-treated copper foil have a corrosion resistance property.

The summary above is not tended to represent every embodiment or every aspect of the present disclosure. Instead, the summary above only provides examples of the novel aspects and features herein.

### BRIEF DESCRIPTION OF THE DRAWINGS

The embodiments of the present invention will be described through exemplary drawings.
FIG. 1 is a flow diagram of the bare copper foil preparation and the nickel coating treatment of the present disclosure.
FIG. 2-1 is a diagram of the bending and crack test of the present disclosure.
FIG. 2-2 shows there are no cracks in the nickel coating layer under a scanning electron microscope (SEM).

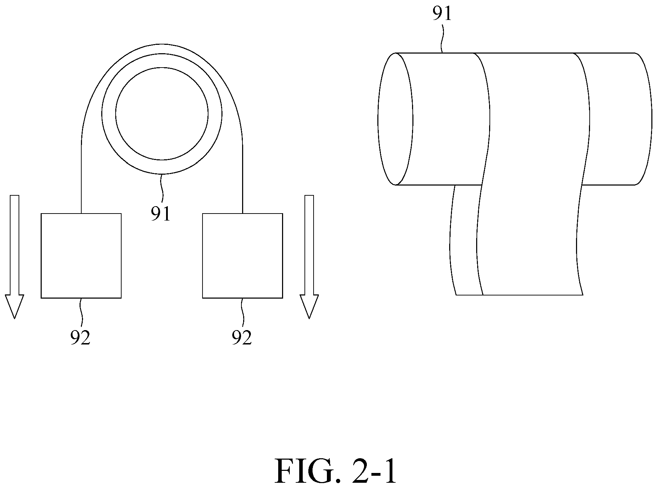

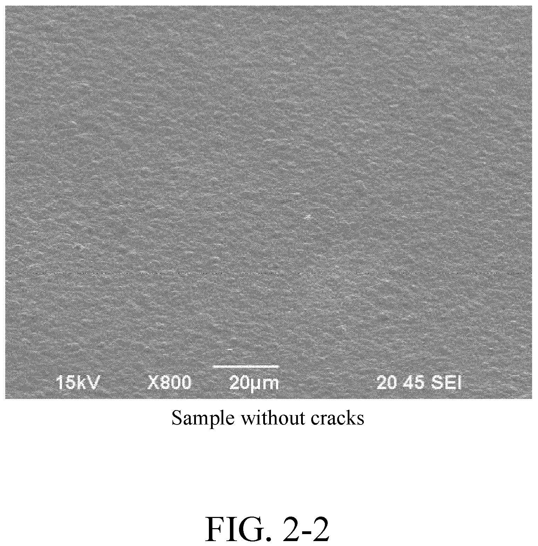

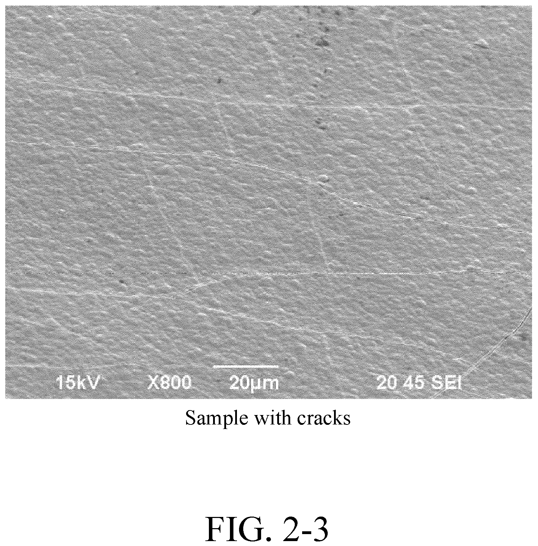

FIG. 2-3 shows there are cracks in the nickel coating layer under a scanning electron microscope (SEM).

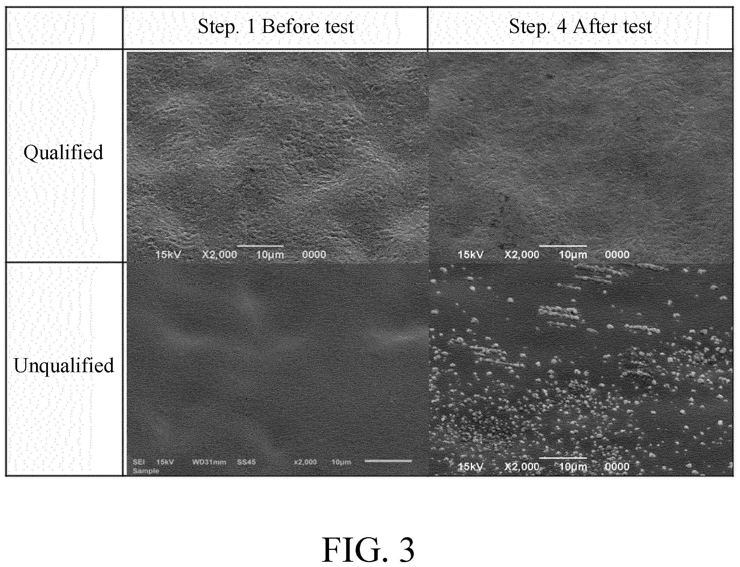

FIG. 3 is a diagram showing the comparison of the surface-treated copper foil of the present disclosure before and after the corrosion test under a scanning electron microscope (SEM).

### DETAILED DESCRIPTION OF THE PREFERRED EMBODIMENTS

The embodiments of the present disclosure will be illustrated by following specific aspects, one having ordinary skill in the art can easily realize other advantages and effects of the present disclosure based on the content described herein.

Note, all ranges and values recited in the present invention are inclusive and combinable. If a number range is provided, every number between the upper and the lower limits of the range including the upper and the lower limits is considered to be disclosed herein. It should be understood that any number range is tended to include all subranges encompassed by the range. For example, a range of "1 to 10" is tended to include all subranges between the minimum value 1 and the maximum value 10 recited and also include the minimum value and maximum values, in other words, a minimum value equal to or larger than 1 and a maximum value equal to or smaller than 10. Since the disclosed value range is consecutive, the range includes every value between the minimum value and the maximum value.

Unless stated otherwise, "comprising", "containing" or "having" particular elements used herein means that other elements such as units, components, structures, regions, parts, devices, systems, steps and connection relationships may be also included rather than excluded. That is, the application "comprises", "includes", "contains" or "has" particular elements, actually allows other unspecified elements, regardless of whether the elements are necessary.

Terms such as "on" and "under" recited herein are used for illustrating the embodiments of the present invention instead of limiting the range capable of being performed by the present invention, the adjustment, exchange and alternation of their relative position should be considered to be the range capable of being performed by the present invention without substantial alternation of the technique of the present invention.

The singular form "a/an" and "the" described herein also comprise a plural form, and the "or" is used changeably with "and/or", unless otherwise stated clearly.

The surface-treated copper foil of the present disclosure comprises a copper layer that has undergone surface treatment, resulting in a copper layer with at least one treatment layer thereon. The copper layer refers to a bare copper foil, and the bare copper foil may be a rolled copper foil or an electrolytic copper foil (also called electrodeposited copper foil). The bare copper foil consists substantially of copper (e.g., >99 wt% copper). At least one side of the bare copper foil, either the first side or the opposite second side, is subjected to a surface treatment, such as coating. Also, both the first side and the second side may undergo surface treatment. The treatment layer provides an amount of nickel (nickel coating amount) of ≥3.0 10⁴ µg/dm² on the first side or the second side of the copper layer. Each of the treatment layers provides a treated surface having a chromaticity L* value of 30-60 and a reduced dale height (Svk) of 0.10-0.65 µm.

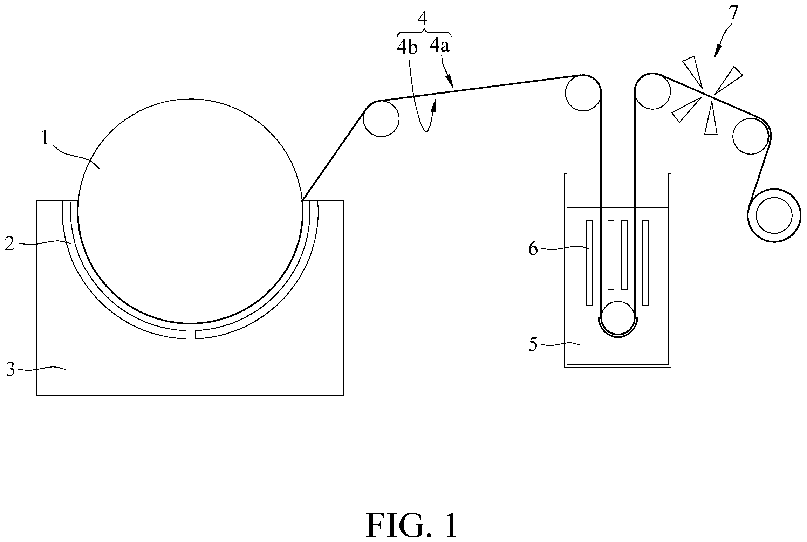

In some embodiments, the bare copper foil may be manufactured by electrodeposition (or referred as electrolysis, electrolytic deposition, electroplating) employing a foil-making machine to provide a bare copper foil having a drum side and a deposition side. As shown in FIG. 1, the foil-making machine may include at least a drum 1 as a cathode, a pair of insoluble metal anode plates 2, and an electrolyte solution 3 and a feeding pipe (not shown in figure). The drum 1 is a rotatable metal drum with a surface as a mirror polished one. The metal anode plates 2 may be fixed at the lower portion of the drum separately to surround the lower portion of the drum. The feeding pipe is fixed directly below the drum 1 and located between the two metal anode plates 2. The drum side 4a of the copper layer 4 is the side of the copper layer 4 contacting the drum used during the electrodeposition; while the deposition side 4b is the side opposite to the drum side 4a or is the side of the copper layer 4 contacting the electrolyte solution 3 during the electrodeposition for forming the copper layer 4. The method of preparing the bare copper foil includes immersing partially the rotating drum 1 in an electrolyte solution 3 containing copper ions. Therefore, under the action of current, copper ions are drawn to the drum 1 and reduced so that copper metal is coated on the surface of the drum 1 and an electrodeposited copper layer 4 is formed on the surface of the drum 1. In a continuous process, by rotating the drum 1, the formed copper layer 4 on the drum is removed while it is transferred out of the electrolyte solution 3. For example, in the continuous process, the copper layer 4 may be drawn away from the drum 1 after forming and passes over or through rollers. In an embodiment, the drum side 4a is equivalent to the first side, and the deposition side 4b is equivalent to the second side.

In order to conform to the high capacitance requirement of battery, the copper layer should not be too thick. In some embodiments, the bare copper foil has a thickness of 4-10 µm. The surface morphology of the bare copper foil could affect the morphology of the treatment layer, in some embodiments, a bare copper foil with a reduced dale height (Svk) of 1 µm or below may be selected to be used as the copper layer.

The surface-treated copper foil of the present disclosure may be obtained by performing a surface treatment on the bare copper foil, thus, in addition to the bare copper foil, the surface-treated copper foil includes a treatment layer on the first or second side. The treatment layer contains nickel that can protect the bare copper foil from, such as, degradation due to corrosion. The treatment layer containing nickel may be prepared by any known method, including immersing the formed bare copper foil in, or passing it through, the solution containing nickel, or forming a nickel metal coating (e.g., by an electroplating bath) on the formed bare copper foil. The process may be continuous and as a part of the whole process for preparing the surface-treated copper foil. The treatment layer may optionally be provided with two layers formed on the first and second sides respectively or formed on only one of the sides, depending on the needs for application. For example, in a button battery, the surface-treated copper foil would contact an electrolyte only at one side so that it is only required to form a treatment layer on the side to prevent corrosion of the surface-treated copper foil.

The present disclosure finds that the nickel coating amount affects the performance of the surface-treated copper foil. Nickel oxidizes moderately at room temperature, which generally classifies it as corrosion-resistant. Nickel has an atomic size (0.125 nm) near copper (0.128 nm) and an atom packing mode of face-centered cubic (FCC) packing as copper and thus as good atom matching with copper. However, nickel has a poor electrical conductivity much lower than copper. Therefore, when the nickel coating amount is too low, e.g., less than 30,000 µg/dm², it has little effect on the electrical conductivity but has poor corrosion resistance that puts the copper layer at risk of sulfide corrosion, resulting in increased inner resistance of the battery, elevated battery temperature and reduced charging/discharging efficiency, also increasing risk of failure and thermal runaway of a solid-state battery. As such, when the nickel coating amount is larger than or equal to 30,000 µg/dm², it can effectively prevent the copper layer from sulfide corrosion. In addition, with the aforementioned coating amount, the surface-treated copper foil also has a property of resisting oxidation and can be applied in a solid-state battery using a high temperature process, such as an oxide-type solid-state electrolyte battery.

Increased amount of nickel in the treatment layer, for example increased nickel coating amount improves the corrosion resistance but imparts a reduced electrical conductivity of the surface-treated copper foil, it may result in increased inner resistance of battery, thereby reducing charging/discharging rate of the battery. As such, in terms of controlling the electrical conductivity of the surface-treated copper foil, the nickel coating amount may be controlled at less than or equal to 215,000 µg/dm². In the present disclosure, by controlling the nickel coating amount in the nickel-containing treatment layer of the surface-treated copper foil within a range of 30,000-215,000 µg/dm², the surface-treated copper foil has sufficient sulfide corrosion resistance while maintaining the required electrical conductivity. After providing a nickel-containing treatment layer on a bare copper foil, the surface-treated copper foil of the present disclosure has a total thickness of about 4.3µm or more, e.g., from 4.3µm to 16µm, from 5µm to 15µm, but not limited thereto.

Examples of the means for controlling the nickel coating amount of the surface-treated copper foil include adjusting the electroplating time, the current density, the temperature of the nickel coating solution and the like. In an embodiment, the coating time for nickel coating is 100-600 seconds, e.g., 100, 150, 200, 250, 300, 350, 400, 450, 500, 550, and 600 seconds. In an embodiment, the current density for nickel coating is 5-20 A/dm², e.g., 5, 10, 15, and 20 A/dm². In an embodiment, the temperature for nickel coating is 40-60°C, e.g., 40, 45, 50, 55, and 60°C.

In an embodiment, each treatment layers of the surface-treated copper foil has an amount of nickel within a range of 3.0 x 10⁴ or more, 3.0 x 10⁴ to 21.5 x 10⁴ µg/dm², 4.0 x 10⁴ to 20.0 x 10⁴ µg/dm², or 4.5 x 10⁴ to 18.5 x 10⁴ µg/dm², e.g., 30,000, 40,000, 50,000, 60,000, 70,000, 80,000, 90,000, 100,000, 110,000, 120,000, 130,000, 140,000, 150,000, 160,000, 170,000, 180,000, 190,000, 200,000, and 210,000 µg/dm², and any value between the values listed above.

As used herein, "chromaticity" refers to the CIE color space, also referred as L*a*b*, which is defined by International Commission on Illumination (CIE) and is an internationally recognized color measurement standard. CIE color space represents a color with three values. "L*" represents the lightness of the color, with an L* value of 0 defined as black and 100 defined as white, i.e., a larger L* value represents a whiter color while a smaller lightness L* value represents a blacker color. "a*" represents a position in human vision between the two opposite colors red/magenta-green, with a positive a* value representing a color closer to red/magenta while a negative value representing a color closer to green. "b*" represents a position in human vision between two opposite colors blue-yellow, with a positive b* value representing a color closer to yellow while a negative value representing a color closer to blue. The CIE color space is the fullest color model that can describe all colors observable by human eyes, wherein the three values L*, a*, and b* can be used for distinguishing the minor difference between two similar colors. The L* value, the a* value, and the b* value used herein are according to JIS Z 8729, and can be derived from the values measured by a spectrophotometer and the method described by JIS Z 8722.

The present disclosure finds that the chromaticity L* value indicates the surface properties of the surface-treated copper foil. With an L* value of 65-80, the surface-treated copper foil appears cracks on its surface after bending, so the nickel-coated treatment layer cannot protect the copper layer properly in a roll-to-roll process involving bending, allowing the copper layer to contact with the solid-state electrolyte, thus resulting in the failure of the solid-state battery. In the present disclosure, by controlling the L* value of the surface-treated copper foil treated surface within a range of 30-60, the problem of cracks in the surface of the nickel-coated copper layer after bending can be ameliorated.

Examples of means for controlling the L* value of the treatment layer of the surface-treated copper foil include adjusting the total organic carbon (TOC) concentration, the electroplating time, the current density, the temperature of the nickel coating solution, and the like. In an embodiment, the desired total organic carbon concentration may be achieved by adjusting the concentration of additives such as a brightener. In an embodiment, the brightener may be saccharin and/or polyethylene glycol (PEG) and its amount may be 30-100 ppm. In an embodiment, the brightener is 1:1 saccharin and PEG. In an embodiment, the electroplating time for nickel coating is 100-600 seconds. In an embodiment, the current density for nickel coating is 5-20 A/dm². In an embodiment, the temperature of nickel coating is 40-60°C.

In an embodiment, the surface-treated copper foil treated surface has a chromaticity L* value within a range of 30-60, e.g., 30, 35, 40, 45, 50, 55, and 60, and any one between the values listed above.

In an embodiment, the surface-treated copper foil treated surface has a chromaticity a* value within a range from -5 to 5, e.g., -5, -4, -3, -2, -1, 0, 1, 2, 3, 4, and 5, and any one between the values listed above.

In an embodiment, the surface-treated copper foil treated surface has a chromaticity b* value within a range from -5 to 5, e.g., -5, -4, -3, -2, -1, 0, 1, 2, 3, 4, and 5, and any one between the values listed above.

As used herein, "reduced dale height" (having the same meaning as "reduced valley depth") and "Svk" are the same terms used as parameters for describing a surface profile, and represent the average depth of reduced dales located below the core portion of the surface profile. The reduced dale height (Svk) is according to ISO 25178-2:2012 and can be measured by using a laser microscope.

The present disclosure finds that recesses (associated with the reduced dale height (Svk)) in the surface of the surface-treated copper foil affect the bending resistance of the surface-treated copper foil as well as the adhesion and coating uniformity of the negative electrode material. In terms of bending resistance, it is presumed that when the reduced dale height (Svk) is too low, the overly smooth surface has a poor ability to bear tensile stress and is prone to cracks or even breaks at a bending site with larger deformation on the outer edge; in contrast, when the reduced dale height (Svk) value is too high, recesses on the surface of the surface-treated copper foil are too deep and the mechanical strength at the recesses is insufficient and prone to cracks after bending. In the present disclosure, by controlling the reduced dale height (Svk) value of the surface-treated copper foil surface (i.e., the treated surface) within a range of 0.10-0.65 µm, the problem of cracks in the surface-treated copper foil after bending can be ameliorated. For coating uniformity, when the reduced dale height (Svk) value is too high, the negative electrode material is coated unevenly, e.g., the negative electrode material is deposited excessively in the recesses; when the reduced dale height (Svk) value is controlled within a suitable range, e.g., less than 0.65 µm, the coating uniformity of the negative electrode material is good; and when the value is further controlled less than 0.45 µm, the coating uniformity of the negative electrode material is even better.

Examples of means for controlling the reduced dale height (Svk) value of the surface-treated copper foil include adjusting the total organic carbon (TOC) concentration, the electroplating time, the current density, the temperature of the nickel coating solution, and the like. In an embodiment, the desired total organic carbon concentration may be achieved by additives such as a brightener. Addition of brighteners during the electroplating process can improve the porosity and gloss of the coating layer, dispersion of the electroplating solution, throwing power, etc. Brighteners are generally stable and can provide high extensibility over a wide range of current densities, allowing the deposition of a bright, flat and easy-to-extend metal layer. The brightener includes but is not limited to metal salts, 2-butyne-1,4-diol, saccharin, condensation polymers of epoxy oxide, pyridine derivatives, ynamine compounds and propynol derivatives, etc., and a combination thereof. In an embodiment, the brightener is saccharin and/or polyethylene glycol (PEG). In an embodiment, the brightener is 1:1 saccharin and PEG. In an embodiment, the brightener concentration is 30-100 ppm. In an embodiment, the electroplating time for nickel coating is 100-600 seconds. In an embodiment, the current density for nickel coating is 5-20 A/dm². In an embodiment, the temperature of nickel coating is 40-60°C.

In an embodiment, the treatment surface of the surface-treated copper foil has a reduced dale height (Svk) within a range of 0.10-0.65 µm, e.g., 0.10, 0.15, 0.20, 0.25, 0.30, 0.35, 0.40, 0.45, 0.50, 0.55, 0.60, and 0.65 µm, and any one between the values listed above.

In an embodiment, the surface-treated copper foil has an electrical conductivity of ≥3.2 x 10⁷ S/m.

In an embodiment, the surface-treated copper foil may be used as, for example, a current collector in a lithium ion secondary battery, and the current collector may be a positive electrode collector and/or a negative electrode collector. In an embodiment, a battery comprises, e.g., a laminated structure of a copper negative electrode collector, a negative electrode active material, a separator, a positive electrode active material, and a positive electrode collector. The active material is coated on at least one side of the surface-treated copper foil. For example, the active material may comprise, e.g., a material containing carbon, silicon, germanium, or a combination or mixture thereof, but not limited thereto.

The present disclosure also provides a lithium ion secondary battery, which comprises the current collector disclosed of the present disclosure.

The electrolyte solution in the lithium ion secondary battery of the present disclosure may comprise a solid-state electrolyte. The solid-state electrolyte may be a crystalline electrolyte, a glass-state electrolyte or a glass-ceramic-state electrolyte, or a polymer electrolyte, but not limited thereto. Specifically, the crystalline electrolyte may be a lithium superionic conductor (LISICON) type, argyrodite type, or the like sulfide solid-state electrolyte; or a garnet type, perovskite type, NASICON type, etc. oxide solid-state electrolyte, but not limited thereto. The glass-state electrolyte may be such as an oxide glass-state electrolyte or a sulfide glass-state electrolyte, but not limited thereto. The polymer electrolyte may be a pure solid-state polymer electrolyte such as a polyethylene oxide-based (PEO-based) polymer and polypropylene oxide-based (PPO-based) polymer; or a colloidal polymer electrolyte such as polyacrylonitrile-based (PAN-based) polymer, poly(methyl methacrylate)-based (PMMA-based) polymer, poly(vinyl chloride)-based (PVC-based) polymer, and poly(vinylidene fluoride)-based (PVDF-based) polymer, but not limited thereto.

The surface-treated copper foils in the embodiments described herein may be used in devices, e.g., any articles or members whose operation needs electric power. For example, independent, separated, or movable members and devices need small and lightweight batteries. The devices may include but not limit to a vehicle (e.g., car, tram, bus, trunk, boat, submarine, and plane), a computer (e.g., microcontroller, notebook computer, and tablet computer), a phone (e.g., smart phone and cordless phone), a personal health monitoring and maintaining device (e.g., blood glucose monitor and artificial cardiac pacemaker), a tool (e.g., electric drill and electric saw), a lighting device (e.g., flashlight, emergency lighting, and sign), a portable measuring device (e.g., pH meter and air monitoring device), and a residential unit (e.g., in spacecraft, in trailer, in house, in plane, in submarine).

In an embodiment, the lithium ion secondary battery may be a laminated lithium ion secondary battery containing a negative electrode and a positive electrode laminated with a separator therebetween, or may be a spirally-wound laminated lithium ion secondary battery containing continuous electrode and separator spirally wound and stacked together, but it is not limited thereto. Depending on different application devices, the lithium ion secondary battery of the present disclosure may be processed into, for example, a laminated secondary battery, a cylindrical secondary battery, a rectangular secondary battery, a pouch secondary battery, or a button secondary battery, but not limited thereto.

Details will be illustrated more specifically further through the following examples. However, the interpretation of the present disclosure shouldn't be considered as limiting that of the following examples. It should be understood that within the scope of this disclosure, the technical features (such as embodiments) mentioned above and below can be freely and mutually combined to form new or better technical solutions, which are omitted for simplicity.

### EXAMPLES

### Examples and Comparative Examples

### A. Preparation of bare copper foils

An electrolyte was prepared by dissolving copper wires in 50 wt% sulfuric acid aqueous solution, yielding a copper sulfate electrolyte containing 320 g/L of copper sulfate (CuSO₄·5H₂O) and 85 g/L of sulfuric acid. The chlorine ion concentration in the copper sulfate electrolyte was 35 ppm.

A bare copper foil was prepared by electrodepositing on a rotating drum immersed partially into the copper sulfate electrolyte described above. The drum was used as a cathode opposite an anode, allowing the copper ions in the electrolyte to be deposited on the drum continuously. A current density of 10 A/dm² was used and the temperature of the electrolyte was controlled at 48°C to prepare the bare copper foil with a thickness of 4-10 µm.

### B. Nickel-coating treatment

Next, an electroplating solution containing 350 g/L of nickel sulfate (NiSO₄), 80 g/L of boric acid and 15 g/L of sodium hypochlorite was formulated, in which the chlorine ion concentration was 15 ppm and the brightener (saccharin: PEG = 1:1) concentration was 10-300 ppm.

As shown in FIG. 1, the bare copper foil described above was delivered via a series of guide rollers to a nickel coating device for nickel-coating treatment. The bare copper foil was immersed in a treatment tank containing the electroplating solution 5, and a nickel-coating treatment layer was formed on the first and the second sides of the bare copper foil by electrodeposition using two sets of electrode plates 6. A current density of 5-30 A/dm² was used and the temperature of the electroplating solution was controlled to 20-80°C, and the electroplating was performed for 60-600 seconds, to prepare a nickel-coated surface-treated copper foil.

After the nickel coating treatment, the surface-treated copper foil subjected to the nickel-coating treatment was directed further to a series of guide rollers, where excess electroplating solution and other materials on its surface were removed with air knives 7. Then, dry and rolled up it to yield a surface-treated copper foil. Various parameters for preparing surface-treated copper foils are listed in Table 1.

**Table 1**

| | Thickness of bare copper foil (µm) | Nickel-coating treatment layer | | | | |
|---|---|---|---|---|---|---|
| | | Electroplating time (second) | Current density (A/dm²) | Time*Current (A*value s/dm²) | Brightener (ppm) | Temp. (°C) |
| Ex. 1 | 8 | 200 | 15 | 3000 | 60 | 50 |
| Ex. 2 | 8 | 300 | 15 | 4500 | 60 | 50 |
| Ex. 3 | 8 | 100 | 15 | 1500 | 60 | 50 |
| Ex. 4 | 8 | 200 | 20 | 4000 | 60 | 50 |
| Ex. 5 | 8 | 150 | 10 | 1500 | 60 | 50 |
| Ex. 6 | 8 | 600 | 5 | 3000 | 60 | 50 |
| Ex. 7 | 8 | 200 | 15 | 3000 | 100 | 50 |
| Ex. 8 | 8 | 200 | 15 | 3000 | 30 | 50 |
| Ex. 9 | 8 | 200 | 15 | 3000 | 60 | 60 |
| Ex. 10 | 8 | 200 | 15 | 3000 | 60 | 40 |
| Ex. 11 | 4 | 200 | 15 | 3000 | 60 | 50 |
| Ex. 12 | 10 | 200 | 15 | 3000 | 60 | 50 |
| Ex. 13 | 8 | 400 | 15 | 6000 | 60 | 50 |
| Ex. 14 | 8 | 450 | 15 | 6750 | 60 | 50 |
| Ex. 15 | 8 | 500 | 15 | 7500 | 60 | 50 |
| Ex. 16 | 8 | 600 | 15 | 9000 | 60 | 50 |
| Comp. Ex. 1 | 8 | 60 | 15 | 900 | 60 | 50 |
| Comp. Ex. 2 | 8 | 120 | 25 | 3000 | 60 | 50 |
| Comp. Ex. 3 | 8 | 100 | 30 | 3000 | 60 | 50 |
| Comp. Ex. 4 | 8 | 200 | 15 | 3000 | 150 | 50 |
| Comp. Ex. 5 | 8 | 200 | 15 | 3000 | 300 | 50 |
| Comp. Ex. 6 | 8 | 200 | 15 | 3000 | 10 | 50 |
| Comp. Ex. 7 | 8 | 200 | 15 | 3000 | 60 | 80 |
| Comp. Ex. 8 | 8 | 200 | 15 | 3000 | 60 | 20 |
| Comp. Ex. 9 | 8 | - | - | - | - | - |

### C. Tests

### (I) Chromaticity (CIE L*a*b*)

Chromaticity assays were performed on the surface-treated copper foils prepared in the Examples and Comparative Examples to measure the L*, a* and b* values of the surface-treated copper foils.
Standard: the L* a* b* color system described by JIS Z 8729 (2004)
Apparatus: spectrophotometer (Konica-Minolta; CM2500c); the measured values were according to JIS Z 8722 (2000)
Illumination/viewing system: 45/0 (45° ring-shaped illumination, vertical viewing)
Observation angle (observer): 2°
Wavelength range: 360-740 nm
Wavelength pitch: 10 nm
Reflectance range: 0-175%; resolution 0.01%
Test time: 1.5 sec
Test/illumination area: Φ7mm/Φ11mm
Light source (illuminant): D65 sunlight

### (II) Reduced dale height (Svk)

Surface profile assays were performed on the surface-treated copper foils prepared in the Examples and Comparative Examples to measure the reduced dale height (Svk) of the surface-treated copper foils.
Standard: ISO 25178-2(2012)
Apparatus: laser microscope (LEXT OLS5000-SAF, Olympus)
Light source wavelength: 405 nm
Objective magnification: 100X objective lens (MPLAPON-100x LEXT, Olympus)
Optical zoom: 1.0X
Observation area: 129 µm × 129 µm
Resolution: 1024 pixels × 1024 pixels
Conditions: enabling the "Auto tilt removal" function of the laser microscope
Filter: "unfiltered"
Air temperature: 24±3°C
Relative humidity: 63±3%

### (III) Nickel coating amount

Inductively coupled plasma (ICP) assays were performed on the surface-treated copper foils prepared in the Examples and Comparative Examples to measure the nickel coating amounts of the surface-treated copper foils.

Sample preparation:
● A surface-treated copper foil was cut into a size of 150 × 150 mm, a tape was adhered on one side of the surface-treated copper foil to prevent the side from dissolution, and the surface-treated copper foil was further cut into a size of 100 × 100 mm (area = 1 dm²) as the test sample.
● 20 mL of 18% HCl was added into a square-shaped container with a bottom size of 120 × 120 mm,. The sample was immersed in the container with the side having the tape being located at the bottom of the container. The container was shaken from side to side continuously during the immersion with the shaking distance to the left and to the right of about 5 cm respectively (shaking to the left and to the right was counted as one time and the shaking frequency was 6 times per minute).
● After immersing for 7.5 minutes, 2 mL 30% hydrogen peroxide solution was further added into the square-shaped container, and the container continued to shake as aforementioned. When the nickel layer on the side not protected by the tape was completely dissolved to expose the original color of the surface-treated copper foil, the action was stopped, and the sample was taken out. The solution was poured into a 50 mL volumetric flask, and added to 50 ml with deionized water.

Analysis: the 50 mL solution aforementioned was determined for the nickel amount by using an inductively coupled plasma atomic emission spectrometer (ICP-AES) using argon as the carrier gas and flow rate to the nebulizer of 0.5 L/min.

Apparatus: Thermo Scientific^{™} iCAP^{™} 7400 ICP-OES Duo MFC

### (IV) Bending cracks

Each surface-treated copper foil was tested to observe cracks and creases after bending.

Test method: as shown in FIG. 2-1, a surface-treated copper foil sample of 80 mm (TD) × 200 mm (MD) was taken and bent forward using a PVC pipe 91 with a nominal diameter of 1/2" (outer diameter 22 mm) firstly by applying a force of 100 g weight 92 on each end of the surface-treated copper foil for 10 seconds, and then the sample was bent backward. Treat forward and backward bending as one bending action and repeat such bending action for 10 times. Thereafter, the surface of the nickel coating layer was observed under a scanning electron microscope (SEM) at 800X and no cracks appeared, as shown in FIG. 2-2;

Results with cracks were as shown in FIGs. 2-3.

### (V) coating uniformity of negative electrode material

Each surface-treated copper foil was tested for the coating uniformity of the negative electrode material, and the negative electrode material, test method and test standard employed were as follow.
• The negative electrode material was prepared by using water as a solvent, and using the negative electrode material having a liquid-solid ratio of 73% (i.e., 100 g the negative electrode material contains 73 g water) as listed in the Table below.

| **Negative electrode material** | **wt% based on total weight of the negative electrode material** |
|---|---|
| Negative electrode active substance (Graphitized mesomorphic asphalt powder; MGPA) | 95 wt% |
| Conduction aid agent (Conductive carbon powder; Super P^{®}) | 1 wt% |
| Tackifier (Carboxymethylcellulose; CMC) | 1.6 wt% |
| Aqueous adhesive (Styrene-butadiene rubber; SBR) | 2.4 wt% |

• After mixing the components of the negative electrode material formulation, the negative electrode material was coated on the surface of the surface-treated copper foil at a rate of 5 m/min to reach a thickness of 200 microns, and then was dried in an oven at 120°C for 1 hr. Then, a presser was used to press a negative electrode (the surface-treated copper foil + the negative electrode material). The drum of the presser had a size of φ250 mm × 250 mm and a hardness of 62-65 HRC, and was made of high carbon chromium bearing steel (SUJ2). The pressing was performed at a pressing (rolling) rate of 1 m/min under a pressure of 3000 psi to prepare the negative electrode.
• The negative electrode was cut into a plurality of specimens of 50 x 50 mm, and a total 10 specimens were taken and weighed with an electric balance to confirm the deviation between each weight value and the average weight value.
a deviation of less than 0.3% is considered Very uniform (⊚);
a deviation of 0.3-0.5% is considered Uniform (∘);
a deviation of 0.5-1.5% is considered Nonuniform (Δ); and
a deviation more than 1.5% is considered Very nonuniform (X).

### (VI) Electrical conductivity

Each surface-treated copper foil was tested for the electrical conductivity, and test method, standard and parameters employed were as follow.

Method: the electrical conductivity was measured by using a four-probe measurement at any three sites to get surface resistance, calculating the electrical conductivity value of the surface-treated copper foil from the surface resistance, and calculating the arithmetic mean of the electrical conductivity of the three sites as the electrical conductivity value.
Standard: IPC TM650 2.5.14
Apparatus: LRS4-TG2 (KeithLink)
Probe diameter: 100 µm
Probes interval: 1.6 mm
Pressure: 100 g
Volume resistivity conversion factor: 4.532
Sample size: 100 mm x 100 mm
Environment temperature: 25°C

### (VII) Sulfur corrosion resistance (FoS)

Each surface-treated copper foil was tested for the sulfur corrosion resistance, and test method employed was as follow.

Method: the typical flowers of sulfur test that expose a sample in sulfur vapor Standard: ASTM B809-95
1. Observation with a scanning electron microscope (SEM) was performed first to confirm the surface morphology of the surface-treated copper foil.
2. The surface-treated copper foil subjected to a bending crack test was cut into 50 mm x 50 mm as the sample.
3. Nitrogen atmosphere pre-baking: the sample was placed in a nitrogen oven at 50°C for 24 hrs (at a nitrogen feeding pressure of 10 psi and a nitrogen flow of 1 L/min) first to prevent the influence of organic volatile gas generated during the test on the FoS test results.
4. Excess sulfur was placed in an enclosed glass vessel, and the sample was hung in the glass vessel and exposed to a saturated sulfur vapor environment at a temperature of 50°C and a relative humidity of 82% for 24 hrs, and then was removed.
5. As shown in FIG. 3, observation with a scanning electron microscope (SEM) was performed to confirm the surface morphology of the surface-treated copper foil in the wet sulfur vapor test, and the copper foil with copper sulfide particles on its surface was considered to be fail.

The results of chromaticity (L*a*b*), reduced dale height (Svk), nickel coating amount, occurrence of bending cracks, coating uniformity, electrical conductivity, and corrosion resistance of each surface-treated copper foil obtained by the test methods above were listed in Table 2 below.

**Table 2**

| | Features (first side) | | | | | Features (second side) | | | | | Efficacies | | | | | |
|---|---|---|---|---|---|---|---|---|---|---|---|---|---|---|---|---|
| | L* | a* | b* | Svk (µm) | Nickel coating amount (µg/dm² ) | L* | a* | b* | Svk (µm) | Nickel coating amount (µg/dm² ) | Bending cracks | | Coating uniformity | | Electrical conductiv ity (*10⁷S/m ) | Corrosion resistance |
| | | | | | | | | | | | First side | Sec ond side | First side | Secon d side | | |
| Ex. 1 | 54 | -0.3 | 2.5 | 0.414 | 93825 | 36 | -1.2 | -1.4 | 0.269 | 92687 | No | No | ⊚ | ⊚ | 5.3 | O |
| Ex. 2 | 58 | -0.4 | 2.3 | 0.482 | 133489 | 45 | -1 | -1.6 | 0.344 | 134938 | No | No | O | ⊚ | 4.9 | O |
| Ex. 3 | 59 | -0.4 | 2.2 | 0.323 | 47863 | 42 | -1.4 | -1.7 | 0.231 | 45036 | No | No | ⊚ | ⊚ | 5.9 | O |
| Ex. 4 | 38 | 1.3 | 1.8 | 0.524 | 107698 | 30 | 1.9 | -1.3 | 0.598 | 112854 | No | No | O | O | 5.1 | O |
| Ex. 5 | 48 | -0.7 | 2 | 0.101 | 48369 | 46 | -1.2 | -1.5 | 0.114 | 47693 | No | No | ⊚ | ⊚ | 5.8 | O |
| Ex. 6 | 57 | -1.1 | 2.1 | 0.103 | 91994 | 53 | -0.9 | 0.9 | 0.122 | 94699 | No | No | ⊚ | ⊚ | 5.3 | O |
| Ex. 7 | 60 | -1.2 | -3.2 | 0.164 | 92423 | 57 | -3.5 | -3.8 | 0.119 | 92336 | No | No | ⊚ | ⊚ | 5.3 | O |
| Ex. 8 | 40 | -1.4 | -2.5 | 0.411 | 93486 | 32 | -2.4 | 3.1 | 0.287 | 93747 | No | No | ⊚ | ⊚ | 5.3 | O |
| Ex. 9 | 47 | -1.5 | 0.9 | 0.356 | 89731 | 34 | -0.1 | 0.6 | 0.226 | 93298 | No | No | ⊚ | ⊚ | 5.2 | O |
| Ex. 10 | 52 | 0.5 | 1.7 | 0.284 | 94090 | 50 | -0.6 | 1.1 | 0.167 | 91881 | No | No | ⊚ | ⊚ | 5.4 | O |
| Ex. 11 | 58 | -0.3 | 2.4 | 0.533 | 93053 | 38 | -1.3 | -1.4 | 0.462 | 93352 | No | No | O | O | 4.5 | O |
| Ex. 12 | 56 | -0.3 | 2.7 | 0.395 | 95594 | 35 | -1.2 | -1.2 | 0.335 | 92864 | No | No | ⊚ | ⊚ | 5.5 | O |
| Ex. 13 | 56 | -0.6 | 1.9 | 0.547 | 183294 | 58 | -1.3 | -0.9 | 0.377 | 180659 | No | No | O | ⊚ | 4 | O |
| Ex. 14 | 54 | -0.7 | 1.6 | 0.568 | 206073 | 59 | -1.1 | -0.2 | 0.429 | 205327 | No | No | O | ⊚ | 3.4 | O |
| Ex. 15 | 57 | -0.5 | 2.1 | 0.541 | *220951* | 56 | -1.5 | -0.3 | 0.392 | *219329* | No | No | O | ⊚ | *3.1* | O |
| Ex. 16 | 56 | -1.0 | 1.8 | 0.533 | *266812* | 54 | -1.5 | -0.5 | 0.434 | *270354* | No | No | O | ⊚ | *2.2* | O |
| Comp. Ex. 1 | 34 | -1.2 | -3.1 | 0.276 | *27325* | 30 | -2 | -3.6 | 0.162 | *26543* | No | No | ⊚ | ⊚ | 6.0 | *X* |
| Comp. Ex. 2 | 36 | 1.3 | -3.7 | 0.614 | 91136 | 31 | -1.6 | -4.3 | *0.696* | 91585 | No | *Yes* | *△* | *X* | 5.2 | *X* |
| Comp. Ex. 3 | *24* | 2.2 | -3.5 | 0.648 | 93375 | *21* | -1.8 | -5.5 | *0.748* | 91328 | *Yes* | *Yes* | *△* | *X* | 5.2 | *X* |
| Comp. Ex. 4 | 58 | -1.3 | -3.5 | *0.096* | 90941 | 56 | -0.6 | 1.5 | *0.091* | 91988 | *Yes* | *Yes* | ⊚ | ⊚ | 5.3 | *X* |
| Comp. Ex. 5 | *74* | -0.9 | -3 | *0.093* | 90270 | *71* | -4.8 | -5.3 | *0.081* | 91770 | *Yes* | *Yes* | ⊚ | ⊚ | 5.4 | *X* |
| Comp. Ex. 6 | *23* | -0.1 | -2.6 | 0.538 | 92873 | *17* | -2.9 | 2.1 | 0.461 | 93069 | *Yes* | *Yes* | O | O | 5.3 | *X* |
| Comp. Ex. 7 | *17* | -2.1 | -0.3 | 0.485 | 97929 | *16* | 0.4 | 1.2 | 0.435 | 98682 | *Yes* | *Yes* | O | ⊚ | 5.2 | *X* |
| Comp. Ex. 8 | *64* | 0.6 | 2.6 | 0.223 | 73254 | *61* | -0.2 | 0.7 | 0.139 | 72016 | *Yes* | *Yes* | ⊚ | ⊚ | 5.5 | *X* |
| Comp. Ex. 9 | 50 | 11 | 12 | 0.367 | - | *18* | 7 | 5 | 0.127 | - | - | - | O | O | 6.3 | *X* |

It can be seen from the above results, by controlling the nickel coating amount on the copper layer, chromaticity L* value and reduced dale height (Svk) of the treatment layer, the surface-treated copper foil of the present disclosure could ameliorate the problem of cracks in the surface after bending and further have good corrosion resistance. In addition, the surface-treated copper foil of the present disclosure also exhibited a good coating uniformity when coating a negative electrode material.

Specifically, based on the corrosion resisting test, by controlling the nickel coating amounts on the copper layer, chromaticity L* values and reduced dale heights (Svk) of the treatment layers of the surface-treated copper foils of Examples 1-16 of the present disclosure, the treatment layers exhibited protective effects and good corrosion resistances, in contrast, the treatment layers of the surface-treated copper foils of Comparative Examples 1-9 only had poor protective properties and poor corrosion resistances, causing the copper on the surface to react with wet sulfur vapor to form copper sulfide. Based on the bending crack test, chromaticity L* values and reduced dale heights (Svk) being too high or too low both allowed cracks to occur in the surface-treated copper foils after bending; on the contrary, by controlling the chromaticity L* values in a suitable range, e.g., 30-60, and controlling the reduced dale heights (Svk) in a suitable range, e.g., 0.10-0.65 µm, it could make the treatment layers stable when bending and not prone to cracks. Based on the coating uniformity test of the negative electrode material, the coating uniformity was worse when the reduced dale heights (Svk) were higher, and the negative electrode material coatings were not uniform when the reduced dale heights (Svk) were more than 0.65 µm.

In addition, it can be seen from the above results that the nickel coating amounts on the copper layer affected the electrical conductivities of the surface-treated copper foils. If the nickel coating amount was too high, e.g., the nickel coating amount higher than 21.5 x 10⁴ µg/dm² in Examples 15 and 16, the electrical conductivities could be less. Therefore, controlling the nickel coating amount of the treatment layers in a suitable range, e.g., 3.0 x 10⁴ to 21.5 x 10⁴ µg/dm², could further improve the electrical conductivities.

Further, it can be also seen from the above results that the coating uniformity of the negative electrode material could be improved by the reduced dale heights (Svk). For example, the negative electrode material coating uniformity met the requirement when the reduced dale heights (Svk) were below 0.65 µm, but became better when the reduced dale heights (Svk) were further controlled below 0.45 µm.

## Claims

1. A surface-treated copper foil for a lithium ion secondary battery, comprising:
a copper layer having a first side and an opposite second side; and
a treatment layer disposed on the first side or the second side of the copper layer, wherein the treatment layer contains nickel,
wherein a nickel coating amount on the first side or the second side of the copper layer is ≥3.0 10⁴ µg/dm²,
wherein the treatment layer provides a treated surface having a chromaticity L* value of 30-60 and a reduced dale height (Svk) of 0.10-0.65 µm.

2. The surface-treated copper foil of claim 1, wherein the surface-treated copper foil comprises another treatment layer, and each of the treatment layers is disposed on the first side and the second side of the copper layer, respectively.

3. The surface-treated copper foil of claim 1, wherein the nickel coating amount on the copper layer is from 3.0 ×10⁴ to 21.5 × 10⁴ µg/dm².

4. The surface-treated copper foil of claim 1, wherein the nickel coating amount on the copper layer is from 4.0 ×10⁴ to 20.0 × 10⁴ µg/dm².

5. The surface-treated copper foil of claim 1, wherein the nickel coating amount on the copper layer is from 4.5 ×10⁴ to 18.5 × 10⁴ µg/dm².

6. The surface-treated copper foil of claim 1, wherein the reduced dale height (Svk) of the treated surface is from 0.10 to 0.45 µm.

7. The surface-treated copper foil of claim 1, wherein a chromaticity a* value of the treated surface is from -5 to 5.

8. The surface-treated copper foil of claim 1, wherein a chromaticity b* value of the treated surface is from -5 to 5.

9. The surface-treated copper foil of claim 1, wherein an electrical conductivity of the surface-treated copper foil is ≥3.2 ×10⁷ S/m.

10. The surface-treated copper foil of claim 1, wherein the copper layer is an electrolytic copper foil or a rolled copper foil.

11. A current collector for a lithium ion secondary battery, comprising the surface-treated copper foil of any one of claims 1-10.

12. A lithium ion secondary battery, comprising the current collector of claim 11.

13. The lithium ion secondary battery of claim 12, wherein the lithium ion secondary battery comprises a solid-state electrolyte.
